# EUROPÄISCHE PATENTANMELDUNG

(11) **EP 4 838 740 A1**
(43) Veröffentlichungstag der Anmeldung: **11.11.2026**
(21) Anmeldenummer: 25174568.3
(22) Anmeldetag: 06.05.2025
(51) Int. Cl.: H02J 3/38

(54) **VORRICHTUNG UND VERFAHREN ZUM UMSCHALTEN EINER STROMVERSORGUNG**

(71) Anmelder: FRONIUS INTERNATIONAL GmbH, 4643 Pettenbach (AT)
(72) Erfinder: Nagelmüller, Martin, 4643 Pettenbach (AT); Hochrainer, Paul, 4643 Pettenbach (AT)
(74) Vertreter: Bratovic, Nino Maria

(57) **Zusammenfassung**

Die Erfindung schafft ein Verfahren und eine Vorrichtung (100) zum Umschalten zwischen einer Stromversorgung eines Stromnetzes (1) durch ein externes Stromnetz (2) und einer Stromversorgung des Stromnetzes (1) als Inselnetz über einen Hybrid-Wechselrichter (10), sowie ein System (1000) mit einer solchen Vorrichtung (100) und einem solchen Hybrid-Wechselrichter (10). Die Vorrichtung (100) ist ausgebildet mit:
einem bistabilen Schütz (110) mit einer ersten Schaltstellung (H1), in welcher das externe Stromnetz (2) mit dem Stromnetz (1) verbunden ist, und mit einer zweiten Schaltstellung (H2), in welcher das externe Stromnetz (2) von dem Stromnetz (1) getrennt ist; und
einer Energiespeichereinrichtung (120), in welcher elektrische Energie zum von dem externen Stromnetz (2) unabhängigen Umschalten des bistabilen Schützes (110) aus der ersten Schaltstellung (H1) in die zweite Schaltstellung (H2) speicherbar ist.

## Beschreibung

### Gebiet der Erfindung

Die Erfindung betrifft eine Vorrichtung und ein Verfahren zum Umschalten zwischen einer Stromversorgung eines Stromnetzes durch ein externes Stromnetz einerseits, und einer Stromversorgung des Stromnetzes als Inselnetz über eine Inselstromquelle andererseits. Bei der Inselstromquelle kann es sich insbesondere um einen Wechselrichter handeln, der auch inselnetzfähig ist, z.B. einen so genannten Photovoltaik-(PV-)Hybrid-Wechselrichter.

### Technischer Hintergrund

Häufig ist es erwünscht, dass ein Stromnetz mit einer Energiequelle, beispielsweise ein Netz eines Haushalts mit einer Photovoltaik-Anlage, möglichst viel der selbst erzeugten elektrischen Energie auch selbst verbraucht. Als Erweiterung kann eine Inselstromquelle vorhanden sein, welche dazu in der Lage ist, eine Stromversorgung für das Stromnetz - zumindest für eine Weile - eigenständig bereitzustellen. Beispielsweise kann ein PV-Hybrid-Wechselrichter als eine solche Inselstromquelle fungieren.

Solche Stromnetze sind allerdings für gewöhnlich auch an ein externes Stromnetz angeschlossen, etwa für den Fall, dass die intern produzierte elektrische Energie für die gewünschte Stromversorgung des Stromnetzes nicht ausreicht. Diese Verbindung kann außerdem dazu verwendet werden, etwaige überschüssige Energie aus dem Stromnetz in das externe Stromnetz einzuspeisen, etwa gegen eine Vergütung. Der Anschluss an dem so genannten Netzanschlusspunkt erfolgt typischerweise mittels eines elektromechanischen Schützes, sodass das Stromnetz bei Bedarf an das externe Stromnetz angeschlossen und von diesem auch wieder getrennt werden kann. Ein PV-Hybrid-Wechselrichter kann in einem solchen Betriebsmodus als Netzkoppler agieren.

Dabei ergeben sich jedoch hohe Anforderungen an die Vorrichtung, welche das Umschalten in das Inselnetz (oder: in den Inselbetrieb) sowie aus dem Inselnetz heraus steuert, um unzulässige Rückspannungen eines Inselnetzes auf ein spannungsloses externes Stromnetz und elektrische Verbindungen insbesondere während des Umschaltvorgangs zu unterbinden.

In der CN 214013884 U ist für den Anschluss ein bistabiles Relais vorgesehen, welches für seinen Betrieb elektrisch aus dem externen Stromnetz versorgt wird. Bei einem Ausfall des externen Stromnetzes, ist dieses Relais somit nicht mehr aktiv schaltbar.

### Zusammenfassung der Erfindung

Es ist daher eine Aufgabe der vorliegenden Erfindung, eine verbesserte Vorrichtung und ein verbessertes Verfahren zum Umschalten zwischen einer Stromversorgung eines Stromnetzes durch ein externes Stromnetz einerseits, und einer Stromversorgung des Stromnetzes als Inselnetz über eine Inselstromquelle andererseits, bereitzustellen.

Diese Aufgabe wird durch die Gegenstände der unabhängigen Patentansprüche gelöst.

Gemäß einem ersten Aspekt stellt die Erfindung somit eine Vorrichtung zum Umschalten zwischen einer Stromversorgung eines Stromnetzes durch ein externes Stromnetz und einer Stromversorgung des Stromnetzes als Inselnetz über einen Hybrid-Wechselrichter bereit, mit:
einem bistabilen Schütz mit einer ersten Schaltstellung, in welcher das externe Stromnetz mit dem Stromnetz verbunden ist,
und mit einer zweiten Schaltstellung, in welcher das externe Stromnetz von dem Stromnetz getrennt ist; und
einer Energiespeichereinrichtung, in welcher elektrische Energie zum von dem externen Stromnetz unabhängigen Umschalten des bistabilen Schützes aus der ersten Schaltstellung in die zweite Schaltstellung speicherbar ist.

Der Hybrid-Wechselrichter kann einerseits als Netzkoppler agieren, wenn das lokale Stromnetz mit dem externen Stromnetz verbunden ist, und andererseits als Inselstromquelle. Eine Inselstromquelle hat insbesondere die Funktion, das (lokale) Stromnetz mit elektrischer Energie zu versorgen, also in einem so genannten Inselnetz, während das Stromnetz von dem externen Stromnetz (mittels des bistabilen Schützes) elektrisch getrennt ist.

Durch die Bistabilität des bistabilen Schützes bleibt der Schaltzustand zunächst unabhängig von dem Zustand des externen Stromnetzes erhalten, d.h., es verbleibt in der ersten Schaltstellung bzw. der zweiten Schaltstellung, sofern es nicht aktiv geschaltet wird. Die zusätzlich bereitgestellte Energiespeichereinrichtung ermöglicht ein aktives Schalten des bistabilen Schützes insbesondere auch dann, wenn das externe Stromnetz ausgefallen ist oder die Verbindung zum externen Stromnetz getrennt wurde.

Gemäß einigen bevorzugten Ausführungsformen, Varianten oder Verfeinerungen von Ausführungsformen umfasst das bistabile Schütz mindestens einen Hauptkontaktsatz und einen zu diesem zwangsgeführten Hilfskontakt, wobei der Hauptkontaktsatz elektrisch zwischen dem Stromnetz und dessen Netzanschlusspunkt zu dem externen Stromnetz angeordnet ist, und der Hilfskontakt elektrisch zwischen der Energiespeichervorrichtung und dem bistabilen Schütz angeordnet ist.

Unter einem Hauptkontaktsatz ist insbesondere eine Anordnung von mehreren Schaltern zu verstehen, von denen jeder in einer separaten elektrischen Phasenleitung angeordnet ist, welche jedoch (im Regelbetrieb) alle gleichläufig geschaltet werden, d.h. entweder alle eingeschaltet oder alle ausgeschaltet sind, sofern nicht ein Fehler vorliegt, etwa wenn einer der Schalter verschweißt ist. Beim Öffnen eines Schalters kann unter gewissen Voraussetzungen nämlich ein unerwünschter Lichtbogen mit beträchtlicher Wärmeentwicklung auftreten. Typischerweise umfasst der Hauptkontaktsatz drei Schalter - jeweils einen für jede der Phasenleitungen für die elektrischen Phasen L1, L2, L3 - oder vier Schalter, wobei ein vierter Schalter für einen Neutralleiter N hinzukommt. Dadurch, dass der Hilfskontakt zwangsgeführt ist, verändert dieser seine Schaltstellung immer nur dann, wenn es auch der (ganze) Hauptkontaktsatz tut, sodass das gesamte bistabile Schütz immer eine von zwei Schaltstellungen einnimmt.

Gemäß einigen bevorzugten Ausführungsformen, Varianten oder Verfeinerungen von Ausführungsformen umfasst die Vorrichtung ein Netz-Sperrrelais, welches dazu angeordnet und ausgelegt ist, ein Umschalten des bistabilen Schützes aus der zweiten Schaltstellung in die erste Schaltstellung nur dann zu ermöglichen, wenn das Netz-Sperrrelais dazu ein entsprechendes Freigabesignal erhalten hat. Es kann vorgesehen sein, dass das Freigabesignal ausschließlich durch den Hybrid-Wechselrichter erzeugbar ist. Wenn der Hybrid-Wechselrichter, etwa ein Solar-Wechselrichter, ein Inselnetz errichtet hat, kann es zu Problemen kommen, wenn das externe Stromnetz einfach wieder zugeschaltet wird. Somit kann der Hybrid-Wechselrichter über das Freigabesignal signalisieren, dass er alle Vorkehrungen dafür getroffen hat, dass das Stromnetz wieder gefahrlos an das externe Stromnetz angekoppelt werden kann.

Gemäß einigen bevorzugten Ausführungsformen, Varianten oder Verfeinerungen von Ausführungsformen ist das Netz-Sperrrelais mit zwei (optional zwangsgeführten) Umschaltkontakten verbunden. Ein erster Umschaltkontakt der beiden Umschaltkontakte ist vorteilhaft dazu angeordnet und eingerichtet, wenn er geschlossen wird, während das bistabile Schütz in der ersten Schaltstellung ist, eine elektrische Verbindung zwischen der Energiespeichereinrichtung und einem Aktuator des bistabilen Schützes herzustellen, um dieses umzuschalten. Bei dem Aktuator handelt es sich typischerweise um eine Spule, die mittels der Energiespeichereinrichtung bestromt wird, um das bistabile Schütz zu aktuieren, d.h., von der einen Schaltstellung in die andere zu wechseln.

Gemäß einigen bevorzugten Ausführungsformen, Varianten oder Verfeinerungen von Ausführungsformen umfasst die Vorrichtung einen rein elektromechanisch ausgebildeten Schaltungsteil, welcher dazu ausgebildet ist, an eine Mess-Schnittstelle des Hybrid-Wechselrichters ein Signal anzulegen, welches davon abhängt, in welcher Schaltstellung sich das bistabile Schütz befindet. Unter "rein elektromechanisch ausgebildet" ist hierbei insbesondere zu verstehen, dass der diese Funktion ausführende Schaltungsteil (oder, bevorzugt, die gesamte Vorrichtung) rein in Hardware ohne Software ausgebildet ist, also keine Recheneinrichtung umfasst, d.h. keinen Mikrocontroller, kein FPGA, oder dergleichen. Die Vorrichtung ist somit besonders kostengünstig realisierbar und zudem besonders robust.

Gemäß einigen bevorzugten Ausführungsformen, Varianten oder Verfeinerungen von Ausführungsformen ist ein zweiter der zwei Umschaltkontakte dazu angeordnet und eingerichtet, eine elektrische Verbindung zwischen der Energiespeichereinrichtung und einer Mess-Schnittstelle des Hybrid-Wechselrichters herzustellen, wenn der erste Umschaltkontakt geschlossen und das bistabile Schütz in der zweiten Schaltstellung ist. Auf diese Weise kann der Hybrid-Wechselrichter darüber informiert werden, dass die zweite Schaltstellung vorliegt und die Energiespeichereinrichtung bereit ist, bei Bedarf dazu verwendet zu werden, das bistabile Schütz in die erste Schaltstellung umzuschalten.

Gemäß einigen bevorzugten Ausführungsformen, Varianten oder Verfeinerungen von Ausführungsformen ist der Hilfskontakt des bistabilen Schützes derart angeordnet und eingerichtet, dass er, wenn das bistabile Schütz in der ersten Schaltstellung ist, die Energiespeichereinrichtung mit dem ersten Umschaltkontakt des Netz-Sperrrelais elektrisch verbindet, und weiterhin derart, dass er die Energiespeichereinrichtung mit dem zweiten Umschaltkontakt elektrisch verbindet, wenn das bistabile Schütz in der zweiten Schaltstellung ist.

Gemäß einigen bevorzugten Ausführungsformen, Varianten oder Verfeinerungen von Ausführungsformen ist das Netz-Sperrrelais dazu eingerichtet, ein Trennungssignal, insbesondere von dem Hybrid-Wechselrichter, zu empfangen, und als elektromechanische Reaktion darauf (insbesondere mittelbar) das Umschalten des bistabilen Schützes von der ersten Schaltstellung in die zweite Schaltstellung auszulösen (oder: zu bewirken).

Gemäß einigen bevorzugten Ausführungsformen, Varianten oder Verfeinerungen von Ausführungsformen umfassen das Freigabesignal und/oder das Trennungssignal jeweils lediglich einen hohen und/oder einen niedrigen Signalpegel. Das Freigabesignal und das Trennsignal können vorteilhaft auch als ein einziges integriertes Signal ausgebildet sein, in welchem ein niedriger Signalpegel als das Freigabesignal und ein hoher Signalpegel als das Trennungssignal fungiert, oder umgekehrt. Auf diese Weise kann die nötige Hardware einfach gehalten werden, und einander widersprüchliche Freigabe- und Trennsignale werden vermieden.

Gemäß einigen bevorzugten Ausführungsformen, Varianten oder Verfeinerungen von Ausführungsformen umfasst die Energiespeichereinrichtung einen Kondensator, welcher über eine Kleinspannungsschnittstelle, insbesondere durch den Hybrid-Wechselrichter, aufladbar ist.

Gemäß einigen bevorzugten Ausführungsformen, Varianten oder Verfeinerungen von Ausführungsformen umfasst die Energiespeichereinrichtung außerdem eine Schaltlogik, welche dazu eingerichtet ist, ein Entladen des Kondensators zum Bereitstellen von Energie für das Umschalten des bistabilen Schützes aus der zweiten Schaltstellung in die erste Schaltstellung oder aus der ersten Schaltstellung in die zweite Schaltstellung nur dann freizugeben, wenn ein Ladezustand des Kondensators einen vorbestimmten Grenzwert übersteigt.

Gemäß einigen bevorzugten Ausführungsformen, Varianten oder Verfeinerungen von Ausführungsformen handelt es sich bei dem bistabilen Schütz um ein elektromechanisches bistabiles Schütz, insbesondere um eines, dessen Haltemechanismus mechanisch und nicht durch eine Magnetfeldwirkung realisiert ist.

Besonders vorteilhaft weist das bistabile Schütz außerhalb eines Umschaltens (d. h., wenn nicht gerade ein Umschaltvorgang durchgeführt wird), keinen Energieverbrauch auf, bleibt also insbesondere ohne Energiezuführung stabil.

Gemäß einigen bevorzugten Ausführungsformen, Varianten oder Verfeinerungen von Ausführungsformen umfasst die Vorrichtung einen manuellen Umschalthebel, über welchen das bistabile Schütz manuell umschaltbar ist. Der manuelle Umschalthebel ist derart in einem Gehäuse angeordnet ist, dass er nicht werkzeuglos betätigbar ist. Insbesondere kann der manuelle Umschaltheber fingersicher ausgebildet sein, beispielsweise nach der IP20 Klassifizierung oder höher.

Die Erfindung stellt außerdem ein Verfahren zum Umschalten zwischen einer Stromversorgung eines Stromnetzes durch ein externes Stromnetz und einer Stromversorgung des Stromnetzes als Inselnetz über einen Hybrid-Wechselrichter (welcher hier insbesondere als Inselstromquelle fungiert) bereit. Das Verfahren ist mit der erfindungsgemäßen Vorrichtung gemäß beliebigen Ausführungsformen ausführbar, aber auch unabhängig davon. Das Verfahren umfasst zumindest die Schritte:
Erkennen, dass das externe Stromnetz für das Stromnetz aktuell nicht mehr verfügbar ist, insbesondere durch den Hybrid-Wechselrichter;
Umschalten, als Reaktion darauf, eines bistabilen Schützes von einer ersten Schaltstellung), in welcher das externe Stromnetz mit dem Stromnetz verbunden ist, in eine zweite Schaltstellung, in welcher das externe Stromnetz von dem Stromnetz getrennt ist, wobei eine elektrische Energie zum Umschalten des bistabilen Schützes aus einer von dem externen Stromnetz unabhängigen Energiespeichereinrichtung entnommen wird; und
Ausbilden eines Inselnetzes zur Stromversorgung des Stromnetzes durch den Hybrid-Wechselrichter.

Gemäß einigen bevorzugten Ausführungsformen, Varianten oder Verfeinerungen von Ausführungsformen umfasst das Verfahren ferner die Schritte:
Erkennen, dass das externe Stromnetz für das Stromnetz wieder verfügbar ist, durch den Hybrid-Wechselrichter;
Erzeugen, nach dem Erkennen, eines Freigabesignals durch den Hybrid-Wechselrichter; und
Umschalten, als Reaktion auf das Freigabesignal, des bistabilen Schützes in die erste Schaltstellung. Das Erzeugen des Freigabesignals kann entweder direkt und automatisch auf das Erkennen der Verfügbarkeit des externen Stromnetzes erfolgen, oder erst, falls eine als Zwischenschritt ausgeführte Prüfung erfolgreich war, in welcher geprüft wird, ob der Hybrid-Wechselrichter bereit ist, den Netzbetrieb wieder herzustellen (also insbesondere wieder als Netzkoppler zu fungieren).

Die Erfindung schafft außerdem ein System zur Stromversorgung eines Stromnetzes, umfassend eine erfindungsgemäße Vorrichtung nach einer Ausführungsform des ersten Aspekts der Erfindung sowie einen damit verbundenen Hybrid-Wechselrichter, bei dem es sich insbesondere um einen Photovoltaik-Wechselrichter handeln kann.

Weitere bevorzugte Ausführungsformen, Varianten und Weiterbildungen von Ausführungsformen ergeben sich aus den abhängigen Patentansprüchen sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: eine schematische Darstellung zur Illustration einer Vorrichtung gemäß einer ersten Ausführungsform der vorliegenden Erfindung in einen ersten Schaltzustand;
- Fig. 2: die Vorrichtung aus Fig. 1 während des Umschaltens von dem ersten Schaltzustand in einen zweiten Schaltzustand;
- Fig. 3: die Vorrichtung aus Fig. 1 und Fig. 2 in der zweiten Schaltstellung;
- Fig. 4: die Vorrichtung aus Fig. 1-3 während des Umschaltens von dem zweiten Schaltzustand wieder in die erste Schaltstellung; und
- Fig. 5: ein schematisches Flussdiagramm zur Erläuterung eines Verfahrens gemäß einer weiteren Ausführungsform der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Nummerierung von Verfahrensschritten erfolgt vorrangig zu deren leichterer Unterscheidung und impliziert nicht zwangsläufig eine zeitliche Reihenfolge, obwohl eine zeitliche Reihenfolge gemäß der Reihenfolge der Nummerierung eine mögliche Variante darstellt. Verschiedene Verfahrensschritte können auch teilweise oder vollständig gleichzeitig miteinander ausgeführt werden. Auch ein mehrfaches oder iteratives Ausführen von Verfahrensschritten ist möglich.

### Detaillierte Beschreibung der Figuren

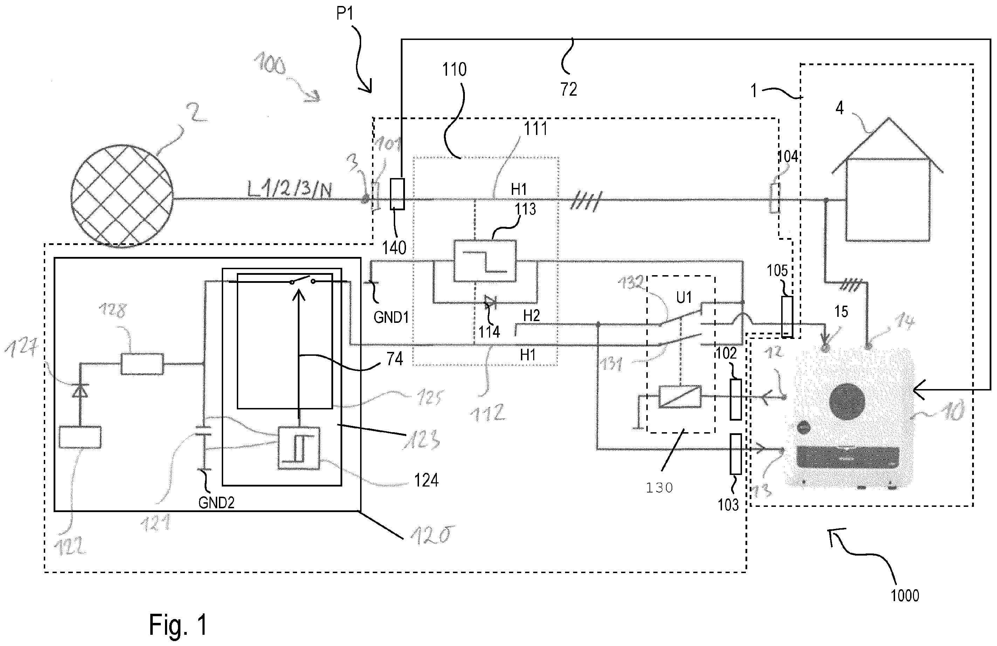

Fig. 1 zeigt eine schematische Darstellung zur Illustration einer Vorrichtung 100 gemäß einer ersten Ausführungsform der vorliegenden Erfindung, also einer Vorrichtung 100 zum Umschalten zwischen einer Stromversorgung eines Stromnetzes 1 durch ein externes Stromnetz 2 und einer Stromversorgung des Stromnetzes 1 als Inselnetz über einen Hybrid-Wechselrichter 10.

Fig. 1 zeigt außerdem schematisch ein System 1000 zur Stromversorgung eines Stromnetzes 1, umfassend die erfindungsgemäße Vorrichtung 100 sowie den damit verbundenen Hybrid-Wechselrichter 10. Im Folgenden wird zum besseren Verständnis der Erfindung das System 1000 im Zusammenhang beschrieben. In Fig. 1 ist die Vorrichtung 100 symbolisch durch einen gestrichelten, unregelmäßigen Rahmen dargestellt; in den nachfolgenden Figuren wird dieser zur verbesserten Übersichtlichkeit weggelassen.

Wie in Fig. 1 symbolisch dargestellt ist, kann es sich bei dem Stromnetz 1 (welches auch als "lokales Stromnetz" bezeichenbar ist) insbesondere um ein Hausnetz eines Haushalts handeln, welches den Hybrid-Wechselrichter 10 sowie einen oder mehrere lokale Verbraucher 4 umfasst, etwa Haushaltsgeräte (Ofen, Kühlschrank etc.), Unterhaltungselektronik (z.B. Fernseher, Radio etc.), oder auch eine Batterie (die im Lademodus als Verbraucher agiert). Der Hybrid-Wechselrichter 10 kann insbesondere ein Photovoltaik-Wechselrichter sein. Der Hybrid-Wechselrichter 10 kann beispielsweise mittels daran (mittelbar oder unmittelbar) angeschlossener Photovoltaik-Module und/oder einer daran (mittelbar oder unmittelbar) angeschlossenen lokalen Batterie eine Stromquelle bereitstellen und damit das Stromnetz 1 unabhängig - und elektrisch getrennt - von dem externen Stromnetz 2 als Inselnetz betreiben, also als Inselstromquelle fungieren.

Die Vorrichtung 100 weist eine äußere Schnittstelle 101 auf, an welcher sie den Netzanschlusspunkt 3 des externen Stromnetzes 2 darstellt oder an diesem angeschlossen ist, sowie eine innere Schnittstelle 104, an welche sie an das Stromnetz 1, insbesondere den Hybrid-Wechselrichter 10 anschließbar oder angeschlossen (wie in Fig. 1 gezeigt) ist. Die Phasenleitungen für die einzelnen Phasen (L1, L2, L3, N) sind in Fig. 1 teilweise vereinfacht als einzelne Linie dargestellt, wobei es sich versteht, dass diese schematisch für mehrere Einzelleitungen steht.

Die Vorrichtung 100 kann außerdem, insbesondere unmittelbar nach der äußeren Schnittstelle 104, einen SmartMeter 140 (d.h. einen intelligenten Strom-/Spannungszähler) aufweisen, welcher unter anderem dazu eingerichtet ist, zu messen, ob das externe Stromnetz 2 vorhanden ist (d.h., ausreichend - oder überhaupt - Strom führt), und diese Information in einem Signal 72 an den Hybrid-Wechselrichter 10 zu übersenden. Diese Information ist insbesondere dann wichtig, wenn das externe Stromnetz 2 nach einem Ausfall wieder den Betrieb aufnimmt, damit der Hybrid-Wechselrichter 10 daraufhin aus dem Inselbetrieb wieder in den Netzbetrieb umschalten kann, d.h. von seiner Funktion als (u.a.) Inselstromquelle wieder in seine Funktion als (u.a.) Netzkoppler übergeht.

Statt des SmartMeters 140 als Teil der Vorrichtung 100 kann auch ein externer SmartMeter vorgesehen sein, welcher dann beispielsweise zwischen dem externen Stromnetz 2 und dem Netzanschlusspunkt 3, oder zwischen dem Netzanschlusspunkt und der äußeren Schnittstelle 101 der Vorrichtung 100 angeordnet sein kann. Der Hybrid-Wechselrichter 10 ist bevorzugt dazu eingerichtet, das Signal 72 von dem SmartMeter 140 zu empfangen und auszuwerten, unabhängig davon, wo der SmartMeter 140 angeordnet ist.

Es versteht sich, dass solche SmartMeter typischerweise weitere Funktionen erfüllen, etwa die Messung von elektrischen Strömen und Spannungen der Verbindung zum externen Stromnetz 2 und die Weiterleitung solcher Messergebnisse an den Hybrid-Wechselrichter 10, welcher diese etwa dazu verwenden kann, an einem übergeordneten Energiemanagement teilzunehmen.

Die Vorrichtung 100 umfasst ein bistabiles Schütz 110, durch welches zwei Schaltstellungen P1, P2 der Vorrichtung 100 realisierbar sind. In der in Fig. 1 gezeigten ersten Schaltstellung P1 ist ein Hauptkontaktsatz 111 des bistabilen Schützes 110 zwischen der äußeren Schnittstelle 101 und der inneren Schnittstelle 104 geschlossen, d.h., das externe Stromnetz 2 ist mit dem Stromnetz 1, und in der gezeigten Variante auch mit dem Hybrid-Wechselrichter 10, elektrisch verbunden. Der Hauptkontaktsatz 111 umfasst einen jeweiligen individuellen Schalter (nicht gezeigt) für jede der einzelnen elektrischen Phasenleitungen L1, L2, L3, N.

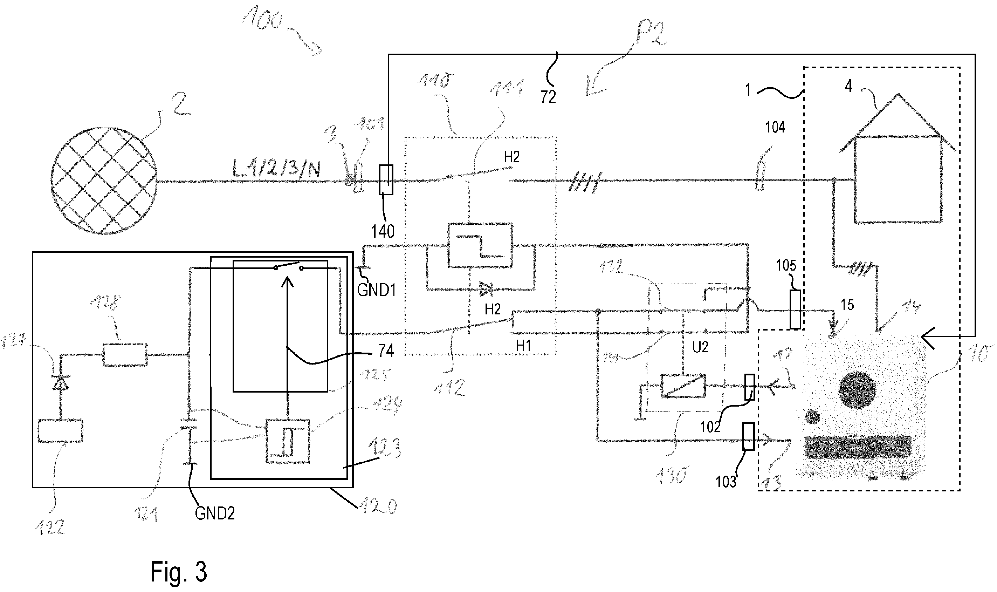

In dieser ersten Schaltstellung P1 kann somit das Stromnetz 1 elektrische Leistung aus dem externen Stromnetz 2 beziehen und/oder elektrische Leistung (beispielsweise aus Photovoltaik-Modulen, welche an dem Hybrid-Wechselrichter 10 angeschlossen sind) in das externe Stromnetz 2 einspeisen. Anders ausgedrückt befindet sich das Stromnetz 1 in der ersten Schaltstellung P1 im "Netzmodus", oder "Netzbetrieb". In der zweiten Schaltstellung P2 (siehe später Fig. 3), welche einem Inselbetrieb entspricht, ist der Hauptkontaktsatz 111 offen.

Das bistabile Schütz 110 umfasst weiterhin einen Hilfskontakt 112, wobei der Hauptkontaktsatz 111 und der Hilfskontakt 112 derart ausgebildet sind, dass der Hilfskontakt 112 immer in einer ersten Schaltstellung H1 ist, wenn auch nur der Kontakt einer Phase des Hauptkontaktsatzes 111 geschlossen ist (Schaltstellung H1), und nur dann in einer zweiten Schaltstellung H2 ist, wenn der gesamte Hauptkontaktsatz 111 offen ist (Schaltstellung H2). Somit nimmt das gesamte bistabile Schütz 110 stets eine der zwei stabilen Schaltstellungen H1, H2 an. Diese Eigenschaft wird als "zwangsgeführt" bezeichnet. Auf diese Weise signalisiert der Hilfskontakt 112 über seine Schaltstellung H1, H2 den tatsächlichen Zustand des Hauptkontaktsatzes 111, beispielsweise auch für den Fall, dass einer der Kontakte des Hauptkontaktsatzes 111 verschweißt ist.

Das bistabile Schütz 110 umfasst außerdem einen Aktuator 113, welcher aktivierbar (insbesondere bestrombar) ist, um das bistabile Schütz 110 von einem stabilen Zustand in den anderen stabilen Zustand zu schalten, d.h., von der ersten Schaltstellung H1 in die zweite Schaltstellung H2 oder umgekehrt. Bei dem Aktuator 113 kann es sich beispielsweise, wie im dargestellten Beispiel, um eine bestrombare Spule handeln, die hier in einer Parallelschaltung mit einer Diode 114 angeordnet ist, wobei die Parallelschaltung wiederum in Sperrrichtung der Diode 114 mit einem Erdanschluss GND1 verbunden ist.

Zur Bestromung des bistabilen Schützes 110 weist die Vorrichtung 100 eine Energiespeichereinrichtung 120 auf, welche über eine - vorteilhaft rein elektromechanische - Schaltung der Vorrichtung 100 mit dem Aktuator 113 des bistabilen Schützes 110 zu dessen Aktuierung verbunden ist. Die Verbindung erfolgt einerseits über den Hilfskontakt 112, andererseits über zwei Umschaltkontakte 131, 132, die zwangsgeführt immer gemeinsam geschaltet werden, und die somit gemeinsam stets entweder eine erste Schaltstellung U1 (wie in Fig. 1) oder eine zweite Schaltstellung U2 (wie in Fig. 3) aufweisen (oder: einnehmen).

In der ersten Schaltstellung P1 der Vorrichtung 100 ist der Hilfskontakt 112 in der ersten Schaltstellung H1, in welcher die Energiespeichereinrichtung 120 mit dem ersten Umschaltkontakt 131 verbunden ist. In der ersten Schaltstellung P1 der Vorrichtung 100 befinden sich die Umschaltkontakte 131, 132 in deren erster Schaltstellung U1, in welcher der erste Umschaltkontakt 131 offen ist. Daher ist in der ersten Schaltstellung P1 der Vorrichtung 100 die Energiespeichereinrichtung 120 elektrisch nicht mit dem bistabilen Schütz 110 verbunden.

In jedem Fall sollte der SmartMeter 140 auf der elektrisch mit dem externen Stromnetz 2 verbundenen Seite des bistabilen Schützes 110 angeordnet sein, damit die Information über den Zustand und den Betrieb des externen Stromnetzes 2 von dem SmartMeter 140 für den Hybrid-Wechselrichter 10 unabhängig von der Schaltstellung H1, H2 des bistabilen Schützes 110 bereitstellbar ist, oder bereitgestellt wird.

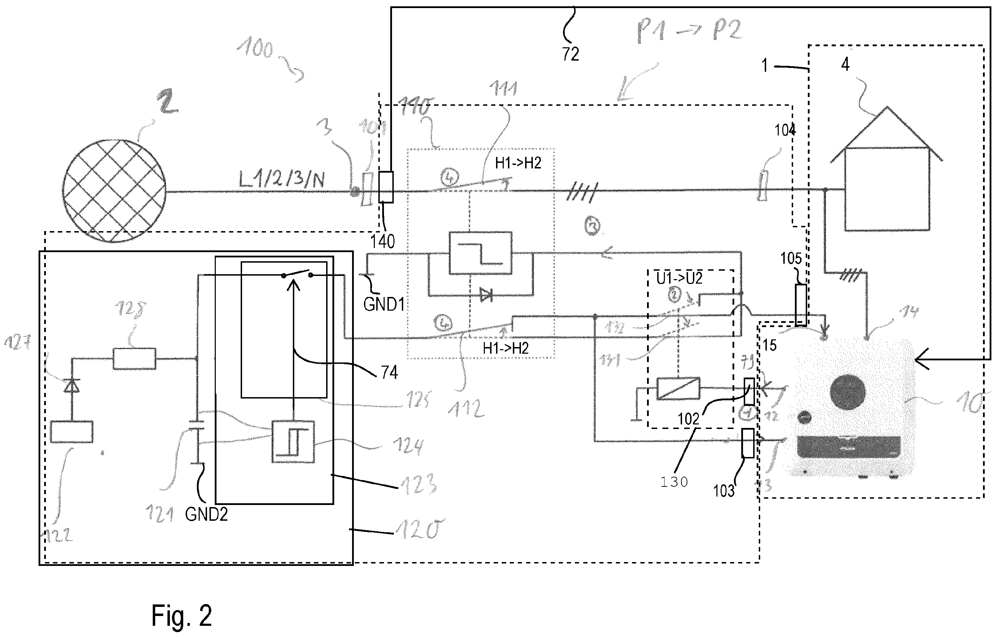

Im Folgenden werden die Umschaltvorgänge zwischen der ersten Schaltstellung P1 der Vorrichtung 100 und der zweiten Schaltstellung P2 der Vorrichtung 100 und wieder zurück beschrieben. Hierzu wird auch auf die nachfolgenden Figuren 2-4 Bezug genommen werden.

Der Hybrid-Wechselrichter 10 weist eine Leistungsleitungs-Schnittstelle 14 auf, welche mit der inneren Schnittstelle 104 der Vorrichtung 100 (und vorteilhafter Weise auch mit den Verbrauchern 4) elektrisch verbunden ist. Über die Leistungsleitungs-Schnittstelle 14 kann der Hybrid-Wechselrichter 10 Leistung an das externe Stromnetz 2 abgeben (etwa falls eine Produktion von PV-Strom vorliegt, die aktuell nicht durch die Verbraucher 4 des lokalen Stromnetzes 1 verbraucht wird), oder Leistung aus dem externen Stromnetz 2 aufnehmen, etwa um eine Batterie des Stromnetzes 1 zu laden. Zusätzlich kann der Hybrid-Wechselrichter 10 über die Leistungsleistungs-Schnittstelle 14 auch, wenn sich das bistabile Schütz 1 in der ersten Schaltstellung H1 befindet, die Netzspannung des externen Stromnetzes 2 detektieren und/oder messen. Somit kann über die Leistungsleistungs-Schnittstelle 14 dem Hybrid-Wechselrichter 10 zumindest eine Information darüber bereitgestellt werden, dass das externe Stromnetz 2 ausgefallen ist.

In dem dargestellten Beispiel ist dem Hybrid-Wechselrichter 10 somit bekannt, dass die Vorrichtung 100 aktuell in der ersten Schaltstellung P1 ist und das bistabile Schütz 110 in seiner ersten Schaltstellung H1 ist. Fällt die Spannung des externen Stromnetzes 2 in dieser Situation beispielsweise auf null, wird der Hybrid-Wechselrichter 10 durch das Signal 72 des SmartMeters 140 darüber informiert, dass das externe Stromnetz 2 ausgefallen ist. Der Hybrid-Wechselrichter 10 ist dazu eingerichtet, als Reaktion darauf an einer Steuerschnittstelle 12 des Hybrid-Wechselrichters 10 ein Trennungssignal 79 auszugeben, wie in Fig. 2 dargestellt ist. Die Vorrichtung 100 wiederum weist eine Steuerschnittstelle 102 auf, welche dazu eingerichtet ist, das Trennungssignal 79 zu empfangen.

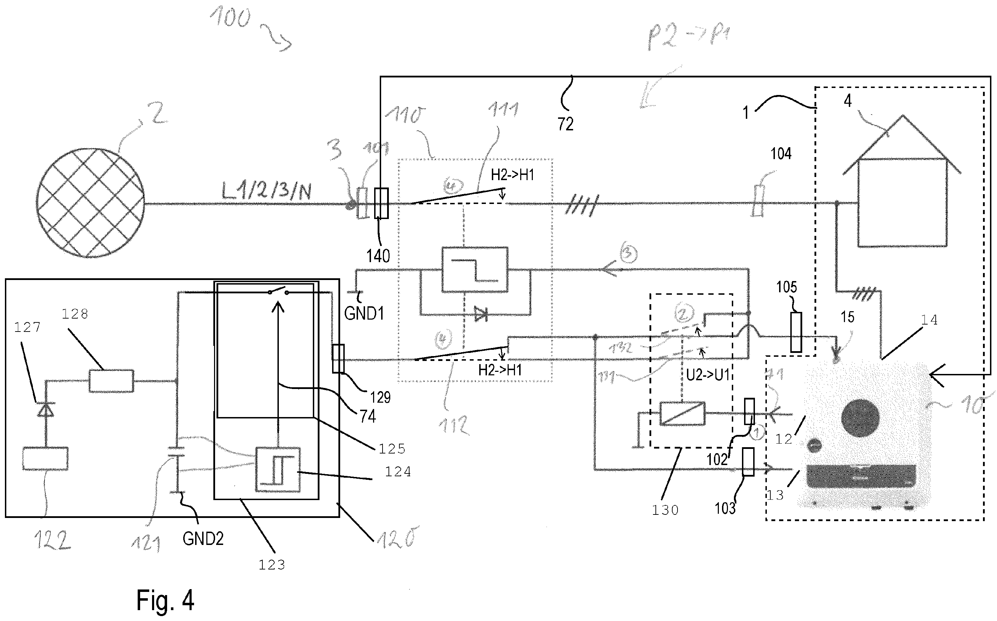

Die Vorrichtung 100 weist ein Netz-Sperrrelais 130 auf, welches durch das Trennungssignal 79 steuerbar ist, die damit verbundenen Umschaltkontakte 131, 132 von deren erster Schaltstellung U1 in deren zweite Schaltstellung U2 umzuschalten. In dem in den Fig. 1-4 gezeigten Beispiel ist das Trennungssignal 79 dadurch realisiert, dass als das Trennungssignal 79 an der Steuerschnittstelle 102 durch den Hybrid-Wechselrichter 10 eine hohe Spannung angelegt wird (siehe eingekreiste Eins - ① - in Fig. 2), nachdem zuvor eine niedrige oder keine Spannung anlag. Das Anliegen dieser niedrigen oder verschwindenden Spannung an der Steuerschnittstelle 102 kann auch als "Freigabesignal" bezeichnet werden, siehe Fig. 4.

Das Anlegen der hohen Spannung an der Steuerschnittstelle 102 bewirkt, dass das Netz-Sperrrelais 130 aktuiert wird und dementsprechend die Umschaltkontakte 131, 132 von der ersten Schaltstellung U1 in die zweite Schaltstellung U2 schaltet, sodass beide Umschaltkontakte 131, 132 ihre Schaltstellung verändern (siehe eingekreiste Zwei - ② - in Fig. 2). Für den ersten Umschaltkontakt 131 bedeutet dies, dass er geschlossen wird, und dadurch die elektrische Verbindung zwischen dem Hilfskontakt 112 (und damit der Energiespeichereinrichtung 120) und dem Aktuator 113 des bistabilen Schützes 110 herstellt (siehe eingekreiste Drei - ③ - in Fig. 2).

Dem Aktuator 113 wird somit automatisch durch die Energiespeichereinrichtung 120 Energie bereitgestellt, wodurch der Hauptkontaktsatz 111, und damit auch der zu diesem zwangsgeführte Hilfskontakt 112, geschaltet werden (siehe eingekreiste Vier - ④ - in Fig. 2). Dadurch wird der Hauptkontaktsatz 111 geöffnet, sodass das externe Stromnetz 2 von dem Stromnetz 1 getrennt wird. Außerdem wird dadurch der Hilfskontakt 112 von seiner ersten Schaltstellung H1 in seine zweite Schaltstellung H2 umgeschaltet.

Wie bereits erwähnt, wird beim Schalten des ersten Umschaltkontakts 131 automatisch (aufgrund einer mechanischen Verbindung mit dem zweiten Umschaltkontakt 132) auch der zweite Umschaltkontakt 132 geschaltet. In der ersten Schaltstellung U1 der Umschaltkontakte 131, 132 verbindet der zweite Umschaltkontakt 132 die zweite Schaltstellung H2 des Hilfskontakts 112 mit dem Aktuator 113. In der zweiten Schaltstellung U2 verbindet der zweite Umschaltkontakt 132 die zweite Schaltstellung H2 des Hilfskontakts 112 mit einer Ausgabeschnittstelle 105 der Vorrichtung 100, welche mit einer Mess-Schnittstelle 15 des Hybrid-Wechselrichters 10 verbindbar oder, wie dargestellt, verbunden ist.

Fig. 3 zeigt die Situation nach dem Umschalten in die zweite Schaltstellung der Vorrichtung 100. Die Energiespeichereinrichtung 120 ist nun über den Hilfskontakt 112 in dessen zweiter Schaltstellung H2 und den zweiten Umschaltkontakt 132 in dessen zweiter Schaltstellung U2 und die Ausgabeschnittstelle 105 mit der Mess-Schnittstelle 15 des Hybrid-Wechselrichters 10 verbunden, sodass dort eine Spannung von der Energiespeichereinrichtung 120 anliegt. Somit kann anhand der Mess-Schnittstelle 13 ein Status des Hilfskontakts 112, und anhand der Mess-Schnittstelle 15 ein Status der Kombination aus dem Hilfskontakt 112 und dem zweiten Umschaltkontakt 132 abgefragt werden, oder dem Hybrid-Wechselrichter 10 bereitgestellt sein.

Somit kann die an der Mess-Schnittstelle 15 des Hybrid-Wechselrichters 10 anliegende Spannung von dem Hybrid-Wechselrichter 10 dazu verwendet werden, zu prüfen, in welcher Schaltstellung U1, U2 sich die Umschaltkontakte 131, 132 befinden, ggfs. in Kombination mit weiteren Schnittstellen, siehe im Folgenden etwa die Erläuterung zur Mess-Schnittstelle 13. Das Anliegen einer Spannung an der Mess-Schnittstelle 15 muss beispielsweise zwangsläufig bedeuten, dass sich der zweite Umschaltkontakt 132 in seiner zweiten Schaltstellung U2 befindet und der Hilfskontakt 112 sich in seiner Schaltstellung H2 befindet.

Die Vorrichtung 100 weist außerdem eine Schnittstelle 103 auf, welche elektrisch mit einem Knoten verbunden ist, welcher elektrisch zwischen der zweiten Schaltstellung H2 des Hilfskontakts 112 und dem zweiten Umschaltkontakt 132 angeordnet ist. Unter der Kurzform, dass "X mit einer Schaltstellung" verbunden ist, soll verstanden werden, dass dieses "X" mit einem Anschluss verbunden ist, welcher von einem Schalter/Kontakt in dieser Schaltstellung kontaktiert wird, und welcher von dem Schalter/Kontakt nicht kontaktiert wird, wenn dieser sich in einer anderen Schaltstellung befindet.

In der ersten Schaltstellung P1 der Vorrichtung 100 liegt an der Schnittstelle 103 keine Spannung an (siehe Fig. 1). In der zweiten Schaltstellung P2 der Vorrichtung 100 jedoch ist die Schnittstelle 103 über den Hilfskontakt 112 in seiner zweiten Schaltstellung H2 elektrisch mit der Energiespeichereinrichtung 120 verbunden, sodass an ihr eine Spannung anliegt.

Über diese Schnittstelle 103 ist somit (insbesondere durch den Hybrid-Wechselrichter 10) prüfbar, in welcher Schaltstellung H1, H2 der Hilfskontakt 112 aktuell ist. Wegen der Zwangsführung des Hilfskontakts 112 mit dem Hauptkontaktsatz 111 kann somit auch die Schaltstellung (offen oder geschlossen) des Hauptkontaktsatzes 111 geprüft werden. Für diese Prüfung ist die Schnittstelle 103 an eine Mess-Schnittstelle 13 des Hybrid-Wechselrichters 10 anschließbar oder, wie in Fig. 1 gezeigt, angeschlossen. Das Ausbilden (oder: Implementieren) eines Inselnetzes durch den Hybrid-Wechselrichter 10 kann somit davon abhängig gemacht werden, ob aktuell an der Schnittstelle 13 des Hybrid-Wechselrichters 10 eine Spannung anliegt, d.h., feststeht, dass der Hauptkontaktsatz 112 tatsächlich geöffnet ist.

Optional kann der Hybrid-Wechselrichter 10 dazu eingerichtet sein, verschiedene Einstellungen oder Prüfungen vorzunehmen, beispielsweise das Inselnetz (oder: den Inselbetrieb) des Stromnetzes 1 sicher zu beenden, ehe das Umschalten in die erste Schaltstellung P1 der Vorrichtung 100 wieder eingeleitet wird, um die Verbindung zu dem externen Stromnetz 2 wieder herzustellen. Ist der Hybrid-Wechselrichter 10 in einem Zustand, in welchem er diese Verbindung wieder herstellen kann und soll, sendet er ein Freigabesignal 71 aus (siehe eingekreiste Eins - ① - in Fig. 4), um die Umschaltkontakte 131, 132 aus deren zweiter Schaltstellung U2 wieder in deren erste Schaltstellung U1 zu schalten (siehe eingekreiste Zwei - ② - in Fig. 4).

In dem gezeigten Beispiel wird auch das Freigabesignal 71 über die Steuerschnittstelle 12 des Hybrid-Wechselrichters 10 ausgegeben, und über die Steuerschnittstelle 102 der Vorrichtung 100 empfangen. Insbesondere ist in dem gezeigten Beispiel vorteilhaft das Freigabesignal 71 dadurch realisiert, dass das Aussenden des Trennsignals 79 eingestellt wird, also die Spannung an der Steuerschnittstelle 102 verringert wird, sodass das Netz-Sperrrelais 130 stromlos geschaltet wird. Dadurch wird der zweite Umschaltkontakt 132 von seiner zweiten Schaltstellung U2 wieder in die erste Schaltstellung U1 gebracht. Beispielsweise kann eine mechanische Vorspannung vorliegen, sodass bei fehlender Spannung an dem Netz-Sperrrelais 130 (also wenn das spannungsarme oder spannungslose "Freigabesignal 71" anliegt), die Umschaltkontakte 131, 132 automatisch in die erste Schaltstellung zurückfallen).

In dieser ersten Schaltstellung U1 verbindet der zweite Umschaltkontakt 132 die Energiespeichereinrichtung 120, über den Hilfskontakt 112 in dessen zweiter Schaltstellung H2, mit dem Aktuator 113 des bistabilen Schützes 110 (siehe eingekreiste Drei - ③ - in Fig. 4).

Hierdurch wird wiederum der Aktuator 113 von der Energiespeichereinrichtung 120 bestromt und somit umgeschaltet, d.h. der Hauptkontaktsatz 111 wird wieder geschlossen (siehe eingekreiste Vier - ④ - in Fig. 4), und der Hilfskontakt 112 wird wieder in seine erste Schaltstellung H1 geschaltet (siehe eingekreiste Vier - ④ - in Fig. 4). Hierdurch ist die Situation aus Fig. 1, mit der ersten Schaltstellung P1 der Vorrichtung 100, wieder hergestellt.

Die Energiespeichereinrichtung 120 weist bei der in den Fig. 1-4 gezeigten Ausführungsform zwei Anschlüsse auf: eine Kleinspannungsschnittstelle 122, über welche der Energiespeichereinrichtung 120 Energie bereitstellbar ist, sowie eine Bestromungsschnittstelle 129, mittels welcher Energie zum Bestromen des Aktuators 113 zum Umschalten des bistabilen Schützes 110 bereitstellbar ist. Die Bestromungsschnittstelle 129 ist somit mit einer Seite des Hilfskontakts 112 elektrisch verbunden und ist über den Hilfskontakt 112 entweder in dessen erster Schaltstellung H1 mit dem ersten Umschaltkontakt 131 oder in dessen zweiter Schaltstellung H2 mit dem zweiten Umschaltkontakt 132 verbindbar bzw. verbunden.

Die eigentliche Speicherung elektrischer Energie in der Energiespeichereinrichtung 120 erfolgt in einem Kondensator 121. Der Kondensator 121 ist zwischen einem Erdanschluss GND2 und - über eine Diode 127 und einen Widerstand 128 - der Kleinspannungsschnittstelle 122 angeschlossen und wird somit über eine an der Kleinspannungsschnittstelle 122 angelegte Kleinspannung geladen. Die Kleinspannung kann insbesondere 25 Volt oder weniger betragen, beispielsweise 12 Volt. Vorteilhaft ist die Kleinspannungsschnittstelle 122 an eine entsprechende Kleinspannungsschnittstelle des Hybrid-Wechselrichters 10 angeschlossen, und wird über diese mit Energie versorgt.

Der Ladezustand des Kondensators 121 wird vorteilhaft mittels einer Schaltlogik 123 überwacht, welche ein Entladen des Kondensators 121 zum Schalten des bistabilen Schützes 110 erst dann freigibt, wenn der Ladezustand des Kondensators 121 (entsprechend einer dort anliegenden Spannung) einen vorgegebenen Wert übersteigt. Bei diesem vorgegebenen Wert kann es sich beispielsweise um einen Wert zwischen 11 Volt und 13 Volt handeln, insbesondere zwischen 11 Volt und 12 Volt, beispielsweise 11,5 Volt.

Die Schaltlogik 123 kann beispielsweise realisiert sein wie in Fig. 1-4 gezeigt: hierzu kann sie einen Schmitt-Trigger 124 (bevorzugt mit Hysterese) aufweisen, welcher dazu eingerichtet ist, die Spannung an dem Kondensator 121 abzugreifen und ein Ausgabesignal 74 zu erzeugen, falls diese Spannung den vorgegebenen Wert übersteigt. Das Ausgabesignal 74 ist dazu eingerichtet, eine Schaltereinrichtung 125 zu schließen, um den Kondensator 121 mit der Bestromungsschnittstelle 129 zu verbinden. Die Schaltereinrichtung 125 kann in mannigfaltiger Weise implementiert werden, etwa unter Verwendung von einem oder mehreren Transistoren, insbesondere mindestens eines MOSFETs.

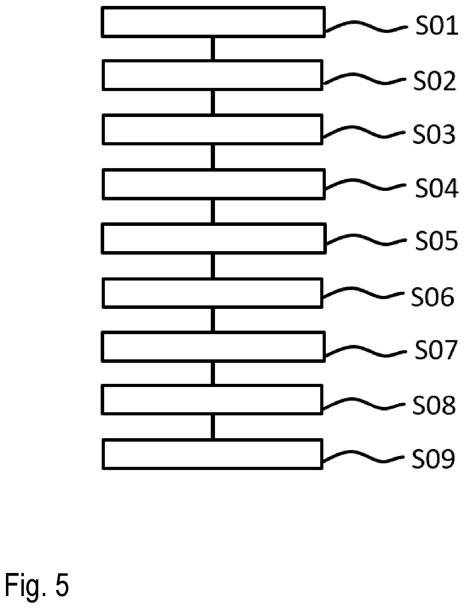

Fig. 5 zeigt ein schematisches Flussdiagramm zur Erläuterung eines Verfahrens gemäß einer weiteren Ausführungsform der vorliegenden Erfindung, d.h. ein Verfahren zum Umschalten zwischen einer Stromversorgung eines Stromnetzes 1 durch ein externes Stromnetz 2 und einer Stromversorgung des Stromnetzes 1 als Inselnetz über einen Hybrid-Wechselrichter 10. Das Verfahren ist insbesondere mittels der Vorrichtung 100 und/oder des Systems 1000 aus den Fig. 1-4 durchführbar und ist gemäß allen mit Bezug auf diese beschriebenen Varianten, Optionen, und Verfeinerungen anpassbar und umgekehrt. Die Fig. 1-4 und die dort verwendeten Bezugszeichen werden daher für die Erläuterung des Verfahrens gemäß Fig. 5 herangezogen werden. Das Verfahren ist jedoch auch unabhängig davon durchführbar.

In einem Schritt S01 wird erkannt (oder: geprüft mit dem Ergebnis, dass erkannt wird), dass das externe Stromnetz 2 für das Stromnetz 1 aktuell nicht mehr verfügbar ist, insbesondere durch den Hybrid-Wechselrichter 10. Wie im Vorangehenden bereits erläutert wurde, kann dies konkret beispielsweise anhand des Signals 92 des SmartMeters 140 erfolgen. Alternativ könnte die fehlende Verfügbarkeit des externen Stromnetzes 2 (also der Ausfall des externen Stromnetzes 2) durch den Hybrid-Wechselrichter 10 beispielsweise auch mittels der Leistungsleistungs-Schnittstelle 14 festgestellt werden.

In einem Schritt S02 wird als Reaktion darauf (also darauf, dass das externe Stromnetz 2 nicht mehr verfügbar ist) ein bistabiles Schütz 110 von einer ersten Schaltstellung H1, in welcher das externe Stromnetz 2 mit dem Stromnetz 1 verbunden ist, in eine zweite Schaltstellung H2, in welcher das externe Stromnetz 2 von dem Stromnetz 1 getrennt ist, wobei eine elektrische Energie zum Umschalten des bistabilen Schützes 110 aus einer von dem externen Stromnetz 2 unabhängigen Energiespeichereinrichtung 120 entnommen wird.

In einem Schritt S04 wird nach dem Umschalten des bistabilen Schützes 110 in die zweite Schaltstellung H2 durch den Hybrid-Wechselrichter 10 ein Inselnetz zur Stromversorgung des Stromnetzes 1 durch 10 ausgebildet. Hierzu kann der Hybrid-Wechselrichter 10, welcher in diesem Zusammenhang als Inselstromquelle fungiert, beispielsweise elektrische Energie aus mindestens einem an den Hybrid-Wechselrichter 10 angeschlossenen Photovoltaik-Modul und/oder mindestens einer an den Hybrid-Wechselrichter 10 angeschlossenen Batterie und/oder mindestens einem an den Hybrid-Wechselrichter 10 angeschlossenen Dieselgenerator und/oder dergleichen empfangen und innerhalb des nun als Inselnetz ausgebildeten lokalen Stromnetzes 1 verteilen, beispielsweise an die Verbraucher 4.

Optional erfolgt das Ausbilden S04 des Inselnetzes erst nach einem optionalen Schritt S03 des Prüfens, ob das Umschalten S02 erfolgreich war, beispielsweise wie im Vorangehenden mit Bezug auf die Schnittstelle 103 und die Mess-Schnittstelle 13 erläutert wurde.

Das Verfahren kann außerdem weitere Schritte umfassen, die auf das nochmalige Umschalten, d.h. auf das Wiederherstellen des Netzbetriebs, ausgerichtet sind.

Hierzu kann in einem Schritt S05 erkannt werden (oder: geprüft werden mit dem Ergebnis, dass erkannt wird), dass das externe Stromnetz 2 für das Stromnetz 1 wieder verfügbar ist, insbesondere durch den Hybrid-Wechselrichter 10, beispielsweise anhand des Signals 72 des SmartMeters 140.

Daraufhin (beispielsweise als direkte, automatische Reaktion darauf) kann in einem Schritt S07 ein Freigabesignal 71 durch den Hybrid-Wechselrichter 10 erzeugt werden, woraufhin als Reaktion auf das Freigabesignal 71 in einem Schritt S08 ein Umschalten des bistabilen Schützes 110 in die erste Schaltstellung H1 erfolgt. Das Freigabesignal 71 kann insbesondere so ausgebildet sein wie im Vorangehenden beschrieben wurde, d.h. als kombiniertes Freigabesignal 71/Trennsignal 79, wobei eine vergleichsweise niedrige (oder verschwindende) Spannung (oder: ein niedriger Signalpegel von zwei Signalpegeln) als Freigabesignal 71 fungiert und eine vergleichsweise höhere Spannung (oder: ein hoher Signalpegel der zwei Signalpegel) auf derselben Leitung und an derselben Schnittstelle 102 als Trennsignal 79 fungiert, oder umgekehrt.

Vor dem Erzeugen S07 des Freigabesignals 71 kann in einem optionalen Schritt S06 geprüft werden, ob der Hybrid-Wechselrichter 10 dazu bereit ist, den Netzbetrieb wiederherzustellen, wobei das Freigabesignal 71 dann nur erzeugt S07 wird, wenn dies der Fall ist.

Nach dem Umschalten S08 des bistabilen Schützes 110 in dessen erste Schaltstellung H1 kann dann in einem Schritt S09 durch den Hybrid-Wechselrichter 10 der Netzbetrieb des Stromnetzes 1 wieder hergestellt werden, d.h., der Hybrid-Wechselrichter 10 wird im Netzkoppelmodus betrieben und fungiert als Netzkoppler.

Obgleich die erfindungsgemäße Vorrichtung 100 und das erfindungsgemäße System 1000 anhand von konkreten Schaltungen und Bauelementen beschrieben wurden, um das Verständnis zu erleichtern, versteht es sich, dass die hierin beschriebenen Prinzipien und Ideen durch den Fachmann verallgemeinerbar sind und gängige Alternativen und Varianten verwendbar sind.

## Patentansprüche

1. Vorrichtung (100) zum Umschalten zwischen einer Stromversorgung eines Stromnetzes (1) durch ein externes Stromnetz (2) und einer Stromversorgung des Stromnetzes (1) als Inselnetz über einen Hybrid-Wechselrichter (10), mit:
einem bistabilen Schütz (110) mit einer ersten Schaltstellung (H1), in welcher das externe Stromnetz (2) mit dem Stromnetz (1) verbunden ist, und mit einer zweiten Schaltstellung (H2), in welcher das externe Stromnetz (2) von dem Stromnetz (1) getrennt ist; und
einer Energiespeichereinrichtung (120), in welcher elektrische Energie zum von dem externen Stromnetz (2) unabhängigen Umschalten des bistabilen Schützes (110) aus der ersten Schaltstellung (H1) in die zweite Schaltstellung (H2) speicherbar ist.

2. Vorrichtung (100) nach Anspruch 1,
wobei das bistabile Schütz (110) mindestens einen Hauptkontaktsatz (111) und einen zu diesem zwangsgeführten Hilfskontakt (1) umfasst, wobei der Hauptkontaktsatz (111) elektrisch zwischen dem Stromnetz (1) und dessen Netzanschlusspunkt (3) zu dem externen Stromnetz (2) angeordnet ist, und der Hilfskontakt (112) elektrisch zwischen der Energiespeichervorrichtung (120) und dem bistabilen Schütz (110) angeordnet ist.

3. Vorrichtung (100) nach Anspruch 1 oder 2,
ferner umfassend ein Netz-Sperrrelais (130), welches dazu angeordnet und ausgelegt ist, ein Umschalten des bistabilen Schützes (110) aus der zweiten Schaltstellung (H2) in die erste Schaltstellung (H1) nur dann zu ermöglichen, wenn das Netz-Sperrrelais (130) dazu ein entsprechendes Freigabesignal (71) erhalten hat.

4. Vorrichtung (100) nach Anspruch 3,
wobei das Netz-Sperrrelais (130) mit zwei Umschaltkontakten (131, 132) verbunden ist, von denen ein erster Umschaltkontakt (131) dazu angeordnet und eingerichtet ist, wenn er geschlossen wird, während das bistabile Schütz (110) in der ersten Schaltstellung (H1) ist, eine elektrische Verbindung zwischen der Energiespeichereinrichtung (120) und einem Aktuator des bistabilen Schützes (110) herzustellen, um dieses umzuschalten.

5. Vorrichtung (100) nach Anspruch 4,
und wobei ein zweiter (132) der zwei zwangsgeführten Umschaltkontakte (131, 132) dazu angeordnet und eingerichtet ist, eine elektrische Verbindung zwischen der Energiespeichereinrichtung (120) und einer Mess-Schnittstelle (15) des Hybrid-Wechselrichters (10) herzustellen, wenn der erste Umschaltkontakt (131, 132) geschlossen und das bistabile Schütz (110) in der zweiten Schaltstellung (H2) ist .

6. Vorrichtung (100) nach Anspruch 2 sowie mindestens einem der Patentansprüche 3 bis 5,
wobei der Hilfskontakt (112) des bistabilen Schützes (110) derart angeordnet und eingerichtet ist, dass er, wenn das bistabile Schütz (110) in der ersten Schaltstellung (H1) ist, die Energiespeichereinrichtung (120) mit dem ersten Umschaltkontakt (131) des Netz-Sperrrelais (130) elektrisch verbindet, und weiterhin derart, dass er die Energiespeichereinrichtung (120) mit dem zweiten Umschaltkontakt (132) elektrisch verbindet, wenn das bistabile Schütz (110) in der zweiten Schaltstellung (H2) ist.

7. Vorrichtung (100) nach einem der Ansprüche 3 bis 6,
wobei das Netz-Sperrrelais (130) dazu eingerichtet ist, ein Trennungssignal (79), insbesondere von dem Hybrid-Wechselrichter (10), zu empfangen, und als elektromechanische Reaktion darauf das Umschalten des bistabilen Schützes (110) von der ersten Schaltstellung (H1) in die zweite Schaltstellung (H2) auszulösen.

8. Vorrichtung (100) nach einem der Ansprüche 3 bis 7,
wobei das Freigabesignal (71) und/oder das Trennungssignal (79) jeweils lediglich einen hohen und/oder einen niedrigen Signalpegel umfassen, und insbesondere als ein einziges integriertes Signal ausgebildet sind, in welchem ein niedriger Signalpegel als das Freigabesignal (71) und ein hoher Signalpegel als das Trennungssignal (79) fungiert, oder umgekehrt.

9. Vorrichtung (100) nach einem der Ansprüche 1 bis 8,
wobei die Energiespeichereinrichtung (120) einen Kondensator (121) umfasst, welcher über eine Kleinspannungsschnittstelle (122), insbesondere durch den Hybrid-Wechselrichter (10), aufladbar ist.

10. Vorrichtung (100) nach Anspruch 9,
wobei die Energiespeichereinrichtung (120) außerdem eine Schaltlogik (123) umfasst, welche dazu eingerichtet ist, ein Entladen des Kondensators (121) zum Bereitstellen von Energie für das Umschalten des bistabilen Schützes (110) aus der zweiten Schaltstellung (H2) in die erste Schaltstellung (H1) nur dann freizugeben, wenn ein Ladezustand des Kondensators (121) einen vorbestimmten Grenzwert übersteigt.

11. Vorrichtung (100) nach einem der Ansprüche 1 bis 10, wobei es sich bei dem bistabilen Schütz (110) um ein elektromechanisches bistabiles Schütz handelt, insbesondere um eines, dessen Haltemechanismus nicht durch eine Magnetfeldwirkung realisiert ist.

12. Vorrichtung (100) nach einem der Ansprüche 1 bis 11, ferner umfassend einen manuellen Umschalthebel, über welchen das bistabile Schütz (110) manuell umschaltbar ist,
wobei der manuelle Umschalthebel derart in einem Gehäuse angeordnet ist, dass er nicht werkzeuglos betätigbar ist.

13. Verfahren zum Umschalten zwischen einer Stromversorgung eines Stromnetzes (1) durch ein externes Stromnetz (2) und einer Stromversorgung des Stromnetzes (1) als Inselnetz über einen Hybrid-Wechselrichter (10), umfassend zumindest die Schritte:
Erkennen (S01), dass das externe Stromnetz (2) für das Stromnetz (1) aktuell nicht mehr verfügbar ist, insbesondere durch den Hybrid-Wechselrichter (10);
Umschalten (S02), als Reaktion darauf, eines bistabilen Schützes (110) von einer ersten Schaltstellung (H1), in welcher das externe Stromnetz (2) mit dem Stromnetz (1) verbunden ist, in eine zweite Schaltstellung (H2), in welcher das externe Stromnetz (2) von dem Stromnetz (1) getrennt ist,
wobei eine elektrische Energie zum Umschalten (S02) des bistabilen Schützes (110) aus einer von dem externen Stromnetz (2) unabhängigen Energiespeichereinrichtung (120) entnommen wird; und
Ausbilden (S04) eines Inselnetzes zur Stromversorgung des Stromnetzes (1) durch den Hybrid-Wechselrichter (10).

14. Verfahren nach Anspruch 13, ferner umfassend die Schritte:
Erkennen (S05), dass das externe Stromnetz (2) für das Stromnetz (1) wieder verfügbar ist, durch den Hybrid-Wechselrichter (10);
Erzeugen (S07), nach dem Erkennen (S05), eines Freigabesignals (71) durch den Hybrid-Wechselrichter (10); und
Umschalten (S08), als Reaktion auf das Freigabesignal (71), des bistabilen Schützes (110) in die erste Schaltstellung (H1).

15. System (1000) zur Stromversorgung eines Stromnetzes, umfassend eine Vorrichtung (100) nach einem der Ansprüche 1 bis 13 sowie einen damit verbundenen Hybrid-Wechselrichter (10).
